(19)

**Europäisches Patentamt**
**European Patent Office**
**Office européen des brevets**

(11)  **EP 4 111 383 B1**

(12)  ## EUROPEAN PATENT SPECIFICATION

(45) Date of publication and mention
of the grant of the patent:
**06.08.2025  Bulletin 2025/32**

(21) Application number: **21731744.5**

(22) Date of filing: **07.06.2021**

(51) International Patent Classification (IPC):
**G06N 3/08** *(2023.01)*        **G06N 3/04** *(2023.01)*

(52) Cooperative Patent Classification (CPC):
**G06N 3/084; G06N 3/044; G06N 3/045**

(86) International application number:
**PCT/EP2021/065124**

(87) International publication number:
**WO 2021/245286 (09.12.2021 Gazette 2021/49)**

(54) **LEARNING OPTIONS FOR ACTION SELECTION WITH META-GRADIENTS IN MULTI-TASK REINFORCEMENT LEARNING**

LERNOPTIONEN FÜR AKTIONSAUSWAHL MIT METAGRADIENTEN BEIM MULTITASK-VERSTÄRKUNGSLERNEN

OPTIONS D'APPRENTISSAGE POUR LA SÉLECTION D'ACTIONS À MÉTAGRADIENTS EN APPRENTISSAGE DE RENFORCEMENT MULTITÂCHE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **05.06.2020  US 202063035467 P**

(43) Date of publication of application:
**04.01.2023  Bulletin 2023/01**

(73) Proprietor: **DeepMind Technologies Limited**
**London EC4A 3TW (GB)**

(72) Inventors:
* **JEYA VEERAIAH, Vivek Veeriah**
**Mountain View, California 94043 (US)**
* **ZAHAVY, Tom Ben Zion**
**London N1C 4AG (GB)**
* **HESSEL, Matteo**
**London N1C 4AG (GB)**
* **XU, Zhongwen**
**London N1C 4AG (GB)**
* **OH, Junhyuk**
**London N1C 4AG (GB)**
* **KEMAEV, Iurii**
**London N1C 4AG (GB)**
* **VAN HASSELT, Hado Philip**
**London N1C 4AG (GB)**
* **SILVER, David**
**London N1C 4AG (GB)**
* **BAVEJA, Satinder Singh**
**Mountain View, California 94043 (US)**

(74) Representative: **Marks & Clerk GST**
**1 New York Street**
**Manchester M1 4HD (GB)**

(56) References cited:
**US-A1- 2019 354 813**

* **PIERRE-LUC BACON ET AL: "The Option-Critic Architecture", 16 September 2016 (2016-09-16), XP055476998, Retrieved from the Internet <URL:https://www.aaai.org/ocs/index.php/AAAI/ AAAI17/paper/viewFile/14858/14328>**
* **CARLOS FLORENSA ET AL: "Stochastic Neural Networks for Hierarchical Reinforcement Learning", ARXIV.ORG, CORNELL UNIVERSITY LIBRARY, 201 OLIN LIBRARY CORNELL UNIVERSITY ITHACA, NY 14853, 10 April 2017 (2017-04-10), XP080761992**

**Description**

BACKGROUND

This specification relates to reinforcement learning.

In a reinforcement learning system, an agent interacts with an environment by performing actions that are selected by the reinforcement learning system in response to receiving observations that characterize the current state of the environment. Some reinforcement learning systems select the action to be performed by the agent in response to receiving a given observation in accordance with an output of a neural network.

Neural networks are machine learning models that employ one or more layers of nonlinear units to predict an output for a received input. Some neural networks are deep neural networks that include one or more hidden layers in addition to an output layer. The output of each hidden layer is used as input to the next layer in the network, i.e., the next hidden layer or the output layer. Each layer of the network generates an output from a received input in accordance with current values of a respective set of parameters.

US2019/354813 describes a system for training an actor neural network in a distributed manner using multiple workers operating independently and asynchronously. Each worker implements the actor neural network and a critic neural network. Florensa et al., "Stochastic Neural Networks for Hierarchical Reinforcement Learning", ar-Xiv:1704.03012v1, describes a system that uses a stochastic neural network that provides a set of skills learned during a pre-training task, and a manager neural network the operates by selecting a skill and committing to it for a fixed number of steps. Pierre-Luc Bacon ET AL: "The Option-Critic Architecture", XP055476998, discloses algorithms for an Option-Critic Architecture.

SUMMARY

The invention is set out in the independent claims.

This specification generally describes a reinforcement learning system for controlling an agent to perform a plurality of tasks while interacting with an environment. The system learns options, where an option comprises a sequence of primitive actions performed by the agent under control of an option policy neural network. A primitive action is an action performed by the agent at a time step. In implementations the system discovers options which are useful for multiple different tasks by meta-learning, more specifically by learning rewards for training the option policy neural network whilst the agent is interacting with the environment.

Thus in one aspect there is described a system for controlling an agent to perform a plurality of tasks while interacting with an environment. The system is configured to, at each of a plurality of time steps, process an input comprising an observation characterizing a current state of the environment to generate an output for selecting an action e.g. one of a predetermined set of possible actions, to be performed by the agent. A task reward is received in response to the action; for some or many time steps the task reward may be zero.

The system may comprise a manager neural network, and a set of option policy neural networks each for selecting a sequence of actions to be performed by the agent according to a respective option policy. The manager neural network may be configured to, at a time step, e.g. at each time step when it needs to pick an option or primitive action, process the observation and data identifying one of the tasks currently being performed by the agent, e.g. a task embedding, according to parameter values of the manager neural network, to generate an output for selecting a manager action from a set of manager actions. The set of manager actions may comprise the possible (primitive) actions that can be performed by the agent, e.g. each action in a predetermined set of possible actions. The set of manager actions may comprise a set of option selection actions, each option selection action selecting one of the option policy neural networks.

Each option policy neural network may be configured to, at each of a succession of time steps (e.g. the time steps whilst the option is selected), process the observation for the time step, according to an option policy defined by parameter values of the option policy neural network, to generate an output for selecting an action, i.e. a primitive action, to be performed by the agent. When the selected manager action is an option selection action, the option policy neural network selected by the manager action generates its output for successive time steps until an option termination criterion is met. When the selected manager action is one of the possible (primitive) actions that can be performed by the agent the output for selecting the action is the selected manager action.

The system may include a set of option reward neural networks, one for each respective option policy neural network. Each option reward neural network may be configured to process the observation at a time step, according to parameter values of the option reward neural network, to generate an option reward for the respective option policy neural network. The option reward may be generated for each time step that the corresponding option is selected.

In implementations the system is configured to train the set of option reward neural networks and the manager neural network using the task rewards. The system may also be configured to train each of the option policy neural networks using the option reward for the respective option policy neural network.

The various neural networks and the training may use any model-based or model-free reinforcement learning method, for example a stochastic or deterministic policy gradient technique such as, merely by way of example, an actor-critic (A-C) method, a Trust Region Policy Optimization (TRPO) method, a Deep Deterministic Policy Gradient (DDPG) method; or a function approximation technique such as a Deep Q-Network (DQN) method. In general in this specification when an output is used to select an action or an option policy neural network the output may define the action or selection directly, or may define a score for each action or selection in a set of actions or selections, or may assign a respective probability to each action or selection e.g. by providing parameters of one or more probability distributions. The task reward may characterize progress of the agent towards completing the identified task.

In implementations the system is configured to train each option reward neural network using the task reward in a meta-gradient training technique, in particular a technique in which parameter values of the option reward neural network are adjusted during, i.e. based on, the agent's interaction with the environment under control of the respective option policy neural network to optimize a return from the environment. In this context a return may refers to a cumulative measure of the task rewards received by the agent, for example, a time-discounted sum of rewards in which future rewards are discounted by a discount factor $\gamma$ when computing the return.

For example, after the option selection action and for a succession of time steps until the termination criterion is met, the training may comprise updating the parameter values of the manager neural network using the task rewards and updating the parameter values of the selected option policy neural network using the option reward for the respective option policy neural network. In this phase the parameters of option reward neural network may be fixed. Then, after the termination criterion is met, the training may comprise updating the parameter values of the option reward neural network for the respective option policy neural network using the task rewards.

The task rewards may define a manager (reinforcement learning) objective function; the option rewards may define an option policy (reinforcement learning) objective function. Gradients of the manager objective function and of the option policy objective function may each comprise a respective policy gradient. Updating the parameter values of the manager neural network may comprise backpropagating gradients of the manager objective function; similarly updating the parameter values of an option policy neural network may comprise backpropagating gradients of the option policy objective function.

In implementations updating the parameter values may comprise generating a trajectory comprising a sequence of one or more actions, chosen by the previously selected option policy neural network, and corresponding observations and task rewards. The parameter values of the option reward neural network for the respective option policy neural network may be updated using the task rewards obtained from the trajectory. This may involve back propagating gradients of an option reward objective function, e.g. a policy gradient objective function, based on the task rewards from the trajectory. The gradients may be back propagated into the respective option reward neural network through the respective option policy neural network e.g. through each of the time steps during which the option policy neural network operated to select a (primitive) action.

In some implementations the same form of estimated return may be used, e.g. in a policy gradient update, for updating the manager neural network, the option reward neural network, and where present an option termination neural network (described later).

In some implementations a policy gradient used for updating the manager neural network, the option reward neural network, and where present an option termination neural network (described later) also depends on a value estimate. The same value estimate may be used for updating each of these neural networks. In this context the value estimate represents a value of the environment being in the current state to successfully performing the identified task. For example it may comprise an estimate of the return for the identified task resulting from the environment being in a current state characterized by the observation.

In an actor-critic based implementation the manager neural network may generate the value estimate for the other neural networks trained using the task rewards e.g. based on the data identifying the task. Each option policy neural network may generate its own value estimate. In an actor-critic based implementation the manager neural network, and each option policy neural network may comprise a neural network, with a policy head to provide corresponding action selection data, and a value head to provide the value estimate. One or more of the manager neural network, an option policy neural network, and an option reward neural network may be updated based on an estimated an n-step return i.e. a return computed from n action selection time steps.

Some implementations of the system include a set of option termination neural networks, one for each respective option policy neural network. Each of the option termination neural networks may be configured to, at each of the time steps, process the observation according to parameter values of the option reward neural network, to generate an option termination value for the respective option policy neural network. For each option reward neural network the option termination value may determine whether the option termination criterion is met. The option reward neural network may generate an option termination value directly or indirectly e.g. it may parameterize a probability distribution from which the option termination value may be sampled.

The system may be configured to train the option termination neural networks using the task rewards in a meta-gradient training technique. This may be a technique in which parameter values of the option termination neural network are adjusted during i.e. based on the agents interaction with the environment under control of the respective option policy neural network, to optimize a return from the environment.

Thus the system may be configured to train the set of option termination neural networks, after the termination criterion is met for a respective option policy neural network, by updating the parameter values of the option reward neural network for the respective option policy neural network using the task rewards. This may comprise generating a trajectory comprising a sequence of one or more actions selected by the respective option policy neural network (i.e. that selected by the option selection action), and corresponding observations and task rewards. Parameter values of the option termination neural network for the respective option policy neural network may then be updated using the task rewards from the trajectory. This may involve back propagating gradients of an option termination objective function based on the task rewards from the trajectory through the option policy neural network and through the corresponding option termination neural network.

In implementations the system is configured to train the manager neural network dependent on an estimated return comprising the expected task rewards from the environment when selecting manager actions according to current parameter values of the manager neural network and on a switching cost. The switching cost encourages the manager neural network to select option policy neural networks to encourage discovery of options that are temporally extended. In implementations the switching cost is configured to reduce the task reward or return at each time step which is used to update the parameters of the manager neural network. It may comprise a small negative value.

The set of option policy neural networks may be implemented as a set of option policy neural network heads on a shared option policy neural network body. Similarly the set of option reward neural networks may comprise a set of option reward neural network heads on a shared option reward neural network, and the set of option termination neural networks may comprise a set of option termination neural network heads on a shared option termination neural network body.

In implementations only the manager neural network receives and process the data identifying the task being performed.

The observations may be pre-processed before being provided to the above described neural networks. For example when the observations are images, the pre-processing may use a stack of convolutional neural network layers, optionally followed by one or more fully connected neural network layers and/or one or more recurrent neural network layers, that maps the observation to a more compact representation. When the observations include additional features, e.g., proprioceptive features, these may be provided as input to the one or more fully connected layers with the output of the convolutional stack.

In another aspect there is described a computer-implemented method of training a system used to control an agent to perform a plurality of tasks while interacting with an environment. The system is configured to, at each of a plurality of time steps, process an input comprising an observation characterizing a current state of the environment to generate an output for selecting an action to be performed by the agent, and receive a task reward in response to the action.

The method may comprise obtaining an observation and task identification data identifying one of the tasks currently being performed by the agent; and processing the observation and task identification data, according to parameter values of a manager neural network, to generate an output for selecting a manager action from a set of manager actions. The set of manager actions may comprise possible actions that can be performed by the agent and a set of option selection actions, each option selection action for selecting one of a set of option policy neural networks. When the selected manager action is one of the possible actions that can be performed by the agent the method may comprise using the selected manager action to generate an output for selecting an action to be performed by the agent. When the selected manager action is an option selection action the method may comprise selecting an option policy neural network and, for successive time steps e.g. until an option termination criterion is met, processing the observation for the time step according to an option policy defined by parameter values of the selected option policy neural network, to generate the output for selecting the action to be performed by the agent.

The method may further comprise maintaining a set of option reward neural networks, one for each respective option policy neural network. During i.e. based processing of the observations for the successive time steps by the selected option policy neural network the method may comprise training the selected option policy neural network using option rewards generated by processing the observations according to parameter values of the respective option reward neural network; and training the manager neural network using the task rewards. Training the selected option policy neural network may comprise updating parameter values of the selected option policy neural network using the option reward from the respective option reward neural network. After processing of the observations for the successive time steps by the selected option policy neural network, e.g. after the termination condition is met, the method may train the respective option reward neural network using the task rewards.

In broad terms the method implements a call-and-return option execution model, training the option policy neural networks on the learned option rewards in an inner training loop, and updating the option reward neural networks in an outer training loop that updates the parameters of the option reward neural networks and, where present, the option termination neural networks, e.g. backpropagating through the inner loop updates.

The method may involve maintaining a set of option termination neural networks, one for each respective option policy neural network, each providing an option termination value according to parameter values of the option termination neural network, that determines whether the option termination criterion is met for the respective option policy neural network. During processing of the observations for the successive time steps by the selected option policy neural network the parameter values of the option termination neural networks (and of the option reward neural networks) may be fixed. After processing the observations for the successive time steps by the selected option policy neural network, the respective option termination neural network may be trained using the task rewards.

Training an option reward neural network may comprise using the (partially) trained selected option policy neural network generate a new trajectory i.e. to select one or more further actions to be performed in the environment in response to one or more observations to receive one or more task rewards. The respective option reward neural network may be trained using the task rewards received in response to the further actions. The respective option termination neural network may be trained in a similar manner.

In some implementations of the above described systems and methods the tasks are multiple different agent control tasks, i.e., tasks that include controlling the same mechanical agent to cause the agent to accomplish different objectives within the same real-world environment or within a simulated version of the real-world environment.

The agent can be, e.g., a robot or an autonomous or semi-autonomous vehicle. For example, the tasks can include causing the agent to navigate to different locations in the environment, causing the agent to locate different objects, causing the agent to pick up different objects or to move different objects to one or more specified locations, and so on. The options may define simpler sub-tasks that relate to the main tasks.

In more detail, in some applications the environment is a real-world environment and the agent is a mechanical agent interacting with the real-world environment. For example, the agent may be a robot interacting with the environment to accomplish one or more specific tasks. As another example, the agent may be an autonomous or semi-autonomous land or air or water vehicle navigating through the environment. In these implementations, the actions may be control signals to control a physical behavior of the robot or vehicle.

In general the observations may include, for example, one or more of images, object position data, and sensor data to capture observations as the agent interacts with the environment, for example sensor data from an image, distance, or position sensor or from an actuator. In the case of a robot or other mechanical agent or vehicle the observations may similarly include one or more of the position, linear or angular velocity, force, torque or acceleration, and global or relative pose of one or more parts of the agent. The observations may be defined in 1, 2 or 3 dimensions, and may be absolute and/or relative observations. For example in the case of a robot the observations may include data characterizing the current state of the robot, e.g., one or more of: joint position, joint velocity, joint force, torque or acceleration, and global or relative pose of a part of the robot such as an arm and/or of an item held by the robot. The observations may also include, for example, sensed electronic signals such as motor current or a temperature signal; and/or image or video data for example from a camera or a LIDAR sensor, e.g., data from sensors of the agent or data from sensors that are located separately from the agent in the environment.

In these applications the actions may be control signals to control the robot, e.g., torques for the joints of the robot or higher-level control commands; or to control the autonomous or semi-autonomous land or air or sea vehicle, e.g., torques to the control surface or other control elements of the vehicle or higher-level control commands; or e.g. motor control data. In other words, the actions can include for example, position, velocity, or force/torque/acceleration data for one or more joints of a robot or parts of another mechanical agent. Action data may include data for these actions and/or electronic control data such as motor control data, or more generally data for controlling one or more electronic devices within the environment the control of which has an effect on the observed state of the environment. For example in the case of an autonomous or semi-autonomous land or air or sea vehicle the actions may include actions to control navigation e.g. steering, and movement e.g. braking and/or acceleration of the vehicle.

The rewards may include e.g. one or more rewards for approaching or achieving one or more target locations, one or more target poses, or one or more other target configurations. For example for a robot a reward may depend on a joint orientation (angle) or velocity, an end-effector position, a center-of-mass position, or the positions and/or orientations of groups of body parts. Costs (i.e. negative rewards) may be similarly defined e.g. dependent upon applied force when interacting with an object, energy usage, or positions of robot body parts.

The system may be used to train a vehicle or robot to perform tasks such as warehouse, logistics, or factory automation tasks, e.g. collecting, placing, or moving stored goods or goods or parts of goods during their manufacture; or the tasks performed may comprise a package delivery control tasks. The actions may include actions relating to steering or other direction control actions, and the observations may include observations of the positions or motions of other vehicles or robots. A robot or vehicle may be trained in simulation before being used in a real-world environment.

In some applications the agent may be a static or mobile software agent i.e. a computer programs configured to operate autonomously and/or with other software agents or people to perform a task. For example the environment may be an integrated circuit routing environment and the system may be configured to learn to perform routing tasks for routing interconnection lines of an integrated circuit such as an ASIC. The rewards (or costs) may then be dependent on one or more routing metrics such as an interconnect resistance, capacitance, impedance, loss, speed or propagation delay, physical line parameters such as width, thickness or geometry, and design rules. The observations may be observations of component positions and interconnections; the actions may comprise component placing actions e.g. to define a component position or orientation and/or interconnect routing actions e.g. interconnect selection and/or placement actions.

In some applications the agent may be an electronic agent and the observations may include data from one or more sensors monitoring part of a plant or service facility such as current, voltage, power, temperature and other sensors and/or electronic signals representing the functioning of electronic and/or mechanical items of equipment. The agent may control actions in a real-world environment including items of equipment, for example in a facility such as: a data center, server farm, or grid mains power or water distribution system, or actions in a manufacturing plant or service facility, or actions in an electrical power generation facility such as a solar or wind farm. The observations may then relate to operation of the plant or facility, e.g. they may include observations of power or water usage by equipment, or observations of power generation or distribution control, or observations of usage of a resource or of waste production. The actions may include actions controlling or imposing operating conditions on items of equipment of the plant/facility, and/or actions that result in changes to settings in the operation of the plant/facility e.g. to adjust or turn on/off components of the plant/facility. The tasks may include multiple different control tasks e.g. resource usage e.g. water or power control; environmental impact control, electrical or other power consumption control; heating, cooling or temperature control, and generally control of items within the facility.

In some applications the environment may be a data packet communications network environment, and the agent may comprise a router to route packets of data over the communications network. The actions may comprise data packet routing actions and the observations may comprise e.g. observations of a routing table which includes routing metrics such as a metric of routing path length, bandwidth, load, hop count, path cost, delay, maximum transmission unit (MTU), and reliability. The tasks may include packet routing tasks with rewards/costs to maximize or minimize one or more of the routing metrics.

In some other applications the agent is a software agent which manages distribution of compute tasks across computing resources e.g. on a mobile device and/or in a data center. In these implementations, the observations may include observations of computing resources such as compute and/or memory capacity, or Internet-accessible resources; and the actions and related tasks may include assigning compute tasks to particular computing resources. The rewards may be dependent upon e.g. utilization of computing resources, electrical power, bandwidth, and computation speed.

In some other applications the environment is an Internet or mobile communications environment and the agent is a software agent which manages a personalized recommendation for a user. The observations may comprise (features characterizing) previous actions taken by the user; the tasks may include actions recommending items such as content items to a user. The rewards may include an estimated likelihood that the user will respond favorably to being recommended the (content) item, or a number of recommendations received by the user (optionally within a time span); a cost may be dependent on the suitability of one or more recommended items, a cost of the recommended item(s).

In some further applications, the environment is a cybersecurity environment. For example, the observations may comprise data characterizing a state of a computer network or a distributed computing system, and the actions may be for tasks to defend the computer system against a cybersecurity attack e.g. by one or more other agents.

The subject matter described in this specification can be implemented in particular embodiments so as to realize one or more of the following advantages.

Some implementations of the techniques can discover options, i.e. sequences of primitive actions, which are useful for multiple tasks, including tasks with discrete actions and continuous control tasks. By contrast it can be challenging to hand-engineered a sequence of actions which is useful for more than one task. The described techniques are general, not restricted to any particular application domain, and can learn options without human supervision or domain-specific knowledge.

In the context of model-based reinforcement learning the described techniques can improve the speed and data efficiency of learning because they can provide updates which apply over longer sequences of actions. In the context of model-free reinforcement learning they can commit the agent to intentional behaviors comprising sequences of actions resulting in better exploration.

Learning the options which are useful for the multiple tasks rather than, for example, hand-designing the options helps to reduce the risk of an option slowing down learning because an option which is not useful can increase the action space. The described techniques can also reduce the risk that the manager neural network learns to perform a task using only primitive actions. Implementations of the system are able to learn the temporal scale of an option, via the option terminal values, as well as the option behavior.

Implementations of the system are thus able to learn a high-quality multi-task policy in an extremely stable and data efficient manner. This makes the described techniques particularly useful for tasks performed by a real-world robot or other mechanical agent, as wear and tear and risk of mechanical failure as a result of repeatedly interacting with the environment can be greatly reduced. A new and complex task can be learned using less data, collected by the system faster, and while consuming fewer computational resources than conventional techniques. By discovering and learning useful options knowledge can effectively be shared across multiple tasks in order to allow the system to effectively control the agent to perform all of the tasks.

Throughout this specification, processing an image, e.g., using a neural network, refers to processing intensity values associated with the pixels of the image using the neural network.

The details of one or more implementations of the subject matter described in this specification are set forth in the accompanying drawings and the description below. Other features, aspects, and advantages of the subject matter will become apparent from the description, the drawings, and the claims.

BRIEF DESCRIPTION OF DRAWINGS

Figure 1 shows a reinforcement learning neural network system that learns options.
Figure 2 shows an example process for using the system of Figure 1 to perform a task.
Figure 3 shows an example of an inner loop process for training the system of Figure 1.
Figure 4 shows an example of an outer loop process for training the system of Figure 1.

In the Figures like reference numerals indicate like elements.

DETAILED DESCRIPTION

This specification describes a neural network based reinforcement learning system and method that learns to discover options, i.e. sequences of primitive actions, that are re-usable across different tasks. Options that are learned in the context of one particular task can slow the learning of another, different task. The techniques described herein enable options of general utility to be discovered, facilitating learning across multiple different tasks. This is achieved by learning what rewards to provide to option policy neural networks directing the options and, in implementations, also learning when to terminate the options.

In implementations the tasks are agent control tasks, typically tasks that involve controlling the same mechanical agent, such as a robot, to accomplish different goals in the same real-world environment. For example the tasks may require the agent to pick up, move to a particular location, arrange, or otherwise manipulate one or more objects in the environment, or they may require the agent to navigate within the environment. In some implementations the system may be trained in a simulated version of the real-world environment and then used in the real-world environment, where it may or may not train further. A task may be specified by its goal. In general only one task is performed at a time.

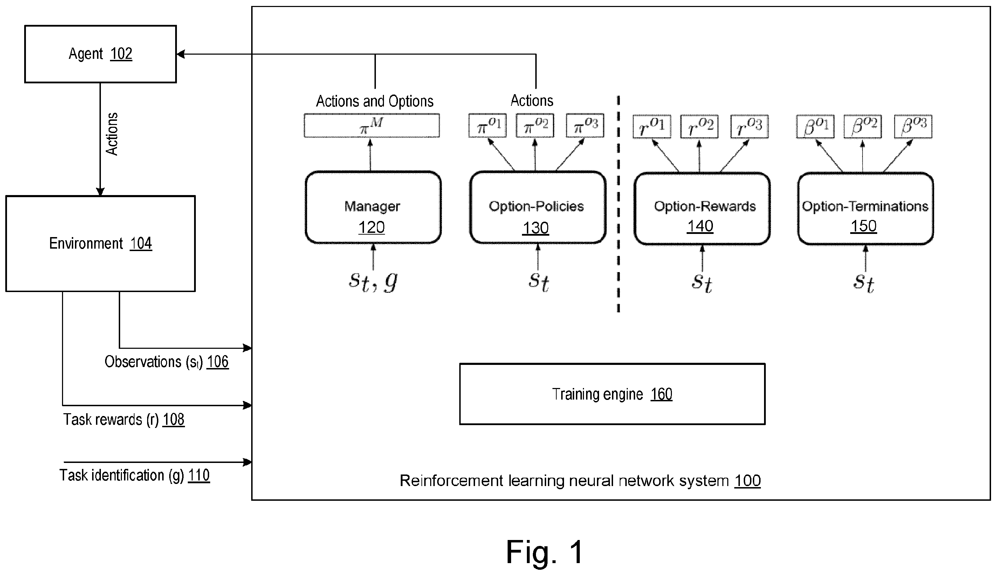

Figure 1 shows a reinforcement learning neural network system 100, which may be implemented as one or more computer programs on one or more computers in one or more locations.

The system 100 has an output which provides control signals to an agent 102 to control actions of the agent in an environment 104. Generally, when the agent performs an action the environment transitions from a current state to a new state, and by repeatedly causing the agent 102 to act in the environment 104 the system 100 can control the agent 102 to complete a specified task. The agent actions may be discrete actions selected from a set of possible actions, or continuous actions i.e. actions defined by a continuous variable such as motor torque or the like.

The system 100 also has one or more inputs to receive data from the environment. This includes data from one or more sensors which provide information characterizing a state of the environment $s_t$ at a time t. These data are referred to as observations 106. The data from the environment also includes task rewards, r. Generally a task reward may be a scalar numeric value characterizing progress of the agent towards the task goal. Task rewards may be received as a task progresses or only at the end of a task, e.g. to indicate successful completion (or otherwise) of the task. A reward may be positive or negative, i.e. as used herein a "reward" includes a cost.

In general the system 100 receives observations of the state of the environment, and processes these to provide the control signals to the agent to cause the agent to perform the task. At least whilst learning the system 100 uses the rewards to learn what control signals to provide to perform the task.

The system 100 is able to learn to perform multiple different tasks and, in some implementations, includes an input to receive data 110 identifying a task to be performed. The data identifying the task to be performed may come from an external source, such as a user, or it may be selected automatically e.g. by a larger system within which the system 100 is included.

The techniques described herein do not rely on any particular way of identifying a task. In some implementations a task may be identified by a goal, $g$, of the task e.g. a representation of a final state to be achieved by the task. In some other implementations a task may simply be identified by a label (and the particular rewards received may vary by task).

The system 100 includes a manager neural network 120, a set of option policy neural networks 130, a set of option reward neural networks 140 and, optionally, a set of option termination neural networks 150. Functions of the neural networks are described below.

At least during training the system 100 also includes a training engine 160. The training engine operates to implement a training process, e.g. as described later, to update parameters of the neural networks.

The training engine trains the manager neural network 120 and the option policy neural networks 130 based on their respective rewards, using reinforcement learning. The training engine also trains the option reward neural networks 140 and the option termination neural networks 150. This uses a meta-gradient approach, as changes to the parameters of these neural networks indirectly affect the performance of the manager neural network 120 and of the option policy neural networks 130. The meta-gradient approach evaluates the performance of the manager and option policy neural networks across multiple tasks and uses this evaluation to train the option reward and option termination neural networks. In this way the option reward and option termination neural networks discover option rewards and termination criteria which are useful across multiple tasks.

The manager neural network 120 is configured to receive and process the observations 106, and the data 110 identifying the task currently being performed, in accordance with parameter values of the manager neural network, to generate a manager neural network output ($\pi^M$). The manager neural network output is configured for selecting a manager action from a set of manager actions comprising possible discrete or continuous actions that can be performed by the agent and a set of option selection actions, each option selection action selecting one of the option policy neural networks. In some implementations the manager neural network output defines one or more parameters of a probability distribution over possible manager actions i.e. it defines a stochastic action selection policy. Then the manager action may be selected e.g. by sampling from the probability distribution or by selecting a highest-probability action. The training engine 160 is configured to train the manager neural network to maximize the task reward.

Each option policy neural network 130 is configured to receive and process the observations 106, in accordance with parameter values of the option policy neural network, to generate an option policy neural network output ($\pi^{oi}$) configured for selecting possible actions that can be performed by the agent. In some implementations the option policy network output defines one or more parameters of a probability distribution over possible discrete or continuous agent actions i.e. it defines a stochastic action selection policy. When selected by the manager neural network 120 an option policy neural network 130 selects actions to be performed by the agent for successive time step until an option termination criterion is met. The actions may be selected e.g. by sampling from the probability distribution or by selecting a highest-probability action. The training engine 160 is configured to train each option policy neural network to maximize an option reward generated by a respective option reward neural network 140.

Each option reward neural network 140 is configured to receive and process the observations 106, in accordance with parameter values of the option reward neural network, to generate the option reward ($r^{oi}$) for its respective option policy neural network 130. In implementations the option reward is a scalar numeric value.

Each option termination neural network 150 is configured to receive and process the observations 106, in accordance with parameter values of the option termination neural network, to generate an option termination value ($\beta^{oi}$) for its respective option policy neural network 130. The option termination value determines whether the option termination criterion is met for its respective option policy neural network 130. In implementations the option termination value is a scalar value e.g. a value stochastically sampled from a categorical distribution such as {0,1} where one value indicates termination; or e.g. a scalar in a range such as [0,1], which indicates a probability of termination.

An option corresponds to a learned sub-goal for a task. The training process described below enables sub-goals, or "options", useful for multiple different tasks to be learned. Each of the options corresponds to one of option policy neural networks. Merely as an example, an implementation may have of order 1-20 options.

As shown in Figure 1, each of the option policy neural networks 130, the option reward neural networks 140, and the option termination neural networks 150 may comprise different neural network heads on a shared neural network body. In some implementations each neural network body may have essentially the same architecture. However in implementations only the manager neural network 120 receives the data 110 identifying the task - the task goal; the other neural networks do not receive the task goal. This helps to discover task-independent options useful across multiple tasks.

Not shown in Figure 1, prior to processing by one or more of the manager neural network 120, option policy neural networks 130, option reward neural networks 140 or option termination neural networks 150, the observations 106 may be encoded and/or different types observation features, such as image features and proprioceptive features, may be combined. Merely by way of example, for the manager neural network 120 the data 110 identifying the task currently being performed may be combined with an observation comprising an image, as an extra channel of an encoded version of the image. In general the manager neural network 120, option policy neural networks 130, option reward neural networks 140 and option termination neural networks 150 may have any architecture e.g. they may include one or more feedforward, convolutional, recurrent, batch-norm or layer-norm neural network layers.

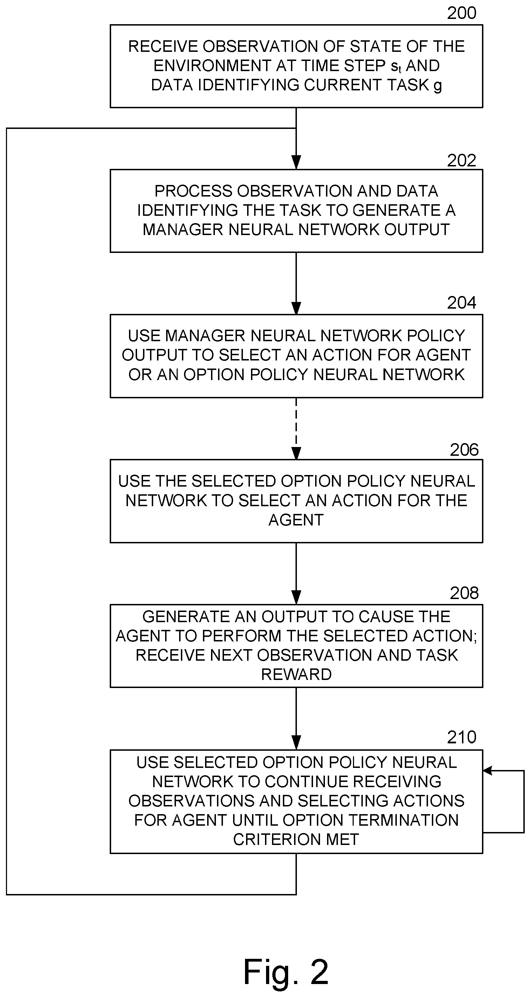

Figure 2 shows an example process for using the reinforcement learning neural network system 100 to perform a task. The process of Figure 2 may be performed during and/or after training by a system of one or more computers in one or more locations.

At step 200 the system receives and processes an observation 106 of a state of the environment $s_t$ at a current time step time t and data 110 identifying a task (goal), $g$, and, at step 202 processes this using the manager neural network 120 to generate a manager neural network output e.g. defining a probability distribution $\pi^M$.

The process then uses the manager neural network output to select a manager action which is either an action, i.e. a primitive action, for the agent or an option selection action for selecting an option policy neural network (step 204). Selecting the manager action may comprise sampling from the probability distribution $\pi^M$. If the manager action is an option selection action then the selected option policy neural network is used to select the action for the agent (step 206).

The process then generates an output to cause the selected action to be performed by the agent e.g. a control signal output (step 208). As a result a next observation of the environment is received, and optionally a task reward.

The output for selecting the action to be performed may be generated by the manager neural network 120 or by the selected option policy neural network. Where the manager neural network outputs an option selection action the process continues to use the selected option policy neural network to receive and process observations and generate outputs for selecting agent actions until an option termination criterion is met (step 210). The process may loop back to process the most recent observation with the manager neural network again.

In implementations the option termination criterion is met when the option termination neural network corresponding to the selected option policy neural network outputs an option termination value indicating that the option should be terminated e.g. a categorical value such as $\beta^{o_i} = 1$, or a scalar value that indicates a probability of termination of greater than a threshold value. When the option termination criterion is met a new manager neural network output is generated to select a new option or primitive action.

An example training process for the reinforcement learning neural network system 100 to perform a task has an inner loop and an outer loop. The inner loop updates the parameters of the manager neural network 120 and of the option policy neural networks 130. The outer loop updates parameters of the option reward neural networks 140 and option termination neural networks 150. At the start of the training process parameters of the neural networks of system 100 are initialized, e.g. randomly.

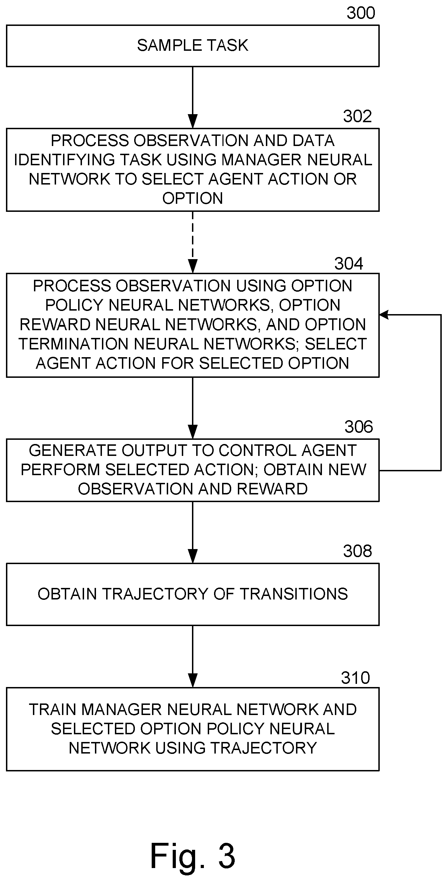

Figure 3 shows an example of the inner loop process; the process may be performed by one or more computers in one or more locations. The process begins by choosing a task e.g. by randomly sampling from possible tasks (step 300).

Then an observation 106 of the state of the environment is obtained and processed together with data 110 identifying the task by the manager neural network 120 to generate the manager neural network output. In this example this is sampled to select an agent action or an "option" i.e. one of the option policy neural networks 130, as previously described (step 302). If the manager neural network selects an agent action then this is performed; if an option is selected an agent action is selected by the selected option policy neural network, again as previously described. The manager neural network may select multiple agent actions before selecting an option.

If an option is selected the observation 106 is processed by each of the selected option policy neural network, the option reward neural network corresponding to the selected option policy neural network, and the option termination neural network corresponding to the selected option policy neural network. In an implementation as shown in Figure 1, with neural networks 130-150 each comprising multiple neural network heads on a shared body, all of the neural networks may process the observation.

The selected option policy neural network is used to select the agent action (step 304). The system then generates an output to control the agent to perform the selected action (step 306), the environment transitions to a new state, an observation of the new state is obtained, and a task reward may be received from the environment.

The option is followed until termination, e.g. as indicated by the option termination value from the corresponding option termination neural network, e.g. $\beta^o = 1$. Thus steps 304 and 306 are repeated. In this way a n-step trajectory of transitions is obtained by the inner loop (step 308).

The trajectory of transitions comprises a transition for each of a series of n time steps (where n may be 1). Each transition comprises data representing an observation, the selected agent action, the task reward (if any), and the option reward from the option reward neural network corresponding to the selected option policy neural network. The transition may also include the option termination value from the corresponding option termination neural network. Optionally a trajectory may include data identifying the task and data indicating the selected option.

The process then uses any reinforcement learning technique, to train the manager neural network 120 and the selected option policy neural network using the n-step trajectory (step 310). Specifically the manager neural network is trained using the task rewards(s), and the selected option policy neural network is trained using the option rewards from the option reward neural network corresponding to the selected option policy neural network. In implementations the manager neural network 120 is only trained using transitions where the manager neural network output was used to select an option (or an agent action).

Training each neural network may comprise backpropagating gradients of a reinforcement learning objective function dependent on the reward(s) for that neural network, through the neural network to update parameters of the neural network. Specifically, the manager neural network may be trained to maximize a time-discounted sum of the task rewards, i.e. a return from the environment, and the selected option policy neural network may be trained to maximize a time-discounted sum of the option rewards. In some implementations the option termination value from the corresponding option termination neural network may be used as a time discount factor (e.g. where the option termination value is not a categorical variable).

In one example implementation an actor-critic reinforcement learning method is used. In such an implementation the manager neural network output and each of the option policy neural network outputs includes an output, e.g. from a separate head, defining a respective state value. The state value is an estimate of a value of the environment being in a current state to successfully performing the task, e.g. an estimated return for the task from the current state, as characterized by a current observation, when using the option policy neural network to select actions. Then an update to the parameter values of the option policy neural network, $\theta^o$, can be determined for each time t as:

$$\theta^o \leftarrow \theta^o + \alpha\left(G_t^o - v^o(s_t)\right) \cdot \nabla_{\theta^o}\left[\log \pi^o(a_t|s_t) - \kappa^o v^o(s_t)\right]$$

where $\pi^o(a_t|s_t)$ is the option policy neural network output for selecting an action $a_t$ at time t given the state of the environment $s_t$ at time t, e.g. a probability value or score for action $a_t$; $v^o(s_t)$ is the option policy neural network state-value output for state $s_t$; $\kappa^o$ is a hyperparameter that weights the state-value updates relative to the policy updates (typically of order unity e.g. 0.5); $\nabla_{\theta^o}$ is a gradient taken with respect to the parameter values of the option policy neural network; $G_t^o$ is a target value or goal, at time t, for the option policy neural network output for selecting an action i.e. an option policy objective function; and $\alpha$ is a learning rate.

Similarly an update to the parameter values of the manager neural network, $\theta^M$, can be determined for times $t_o$ when an option is sampled as:

$$\theta^M \leftarrow \theta^M + \alpha\left(G_{t_o}^M - v^M(s_{t_o})\right) \cdot \nabla_{\theta^M}\left[\log \pi^M(o|s_{t_o}, g) - \kappa^M v^M(s_{t_o}, g)\right]$$

where $\pi^M(o|s_{t_o}, g)$ is the manager neural network output for selecting option o at time $t_o$ given the task identity g and the state of the environment $s_{t_o}$ at time $t_o$, e.g. a probability value or score for option o; $v^M(s_{t_o})$ is the manager neural network state-value output for state $s_{t_o}$; $\kappa^M$ is a hyperparameter that weights the state-value updates relative to the policy updates (typically of order unity e.g. 0.5); $\nabla_{\theta^M}$ is a gradient taken with respect to the parameter values of the manager neural network; $G_{t_o}^M$ is a target value or goal, at time $t_o$, for the manager neural network output for selecting an option i.e. a manager objective function; and $\alpha$ is the or another learning rate.

The target value or goal for the option policy neural network output, $G_t^o$, and for the manager neural network output, $G_{t_o}^M$, may each be a respective n-step return. The n-step return may be evaluated over the n-step trajectory acquired by the inner loop i.e. a trajectory starting at time $t_o$ and ending n time steps later when the option termination neural network indicates that the option should finish. The n-step return for the option policy neural network output is evaluated using the option rewards from the option reward neural network for the option policy neural network. For example, if the option termination value $\beta_t^o$ for the option policy neural network at time t is used as the time discount factor:

$$G_t^o = \sum_{j=1}^{n}\left(1 - \beta_{t+j}^o\right)^j r_{t+j}^o + (1 - \beta_{t+n}^o)^{n+1} v^o(s_{t+n})$$

The n-step return for the option policy neural network output is evaluated using the task rewards from the environment. For example:

$$G_t^M = \sum_{j=1}^{n} \gamma^j r_{t+j} + \gamma^{n+1} v^M(s_{t+n}) - \gamma^n c$$

where $\gamma$ is a time discount factor; and -c represents a switching cost which is added, on option terminations, to the per-step rewards for the manager neural network updates. The switching cost is a hyperparameter that encourages the manager neural network to select options which are temporally extended, thus aiding their discovery. Merely by way of example, c may have a value comparable to but smaller than the reward scale.

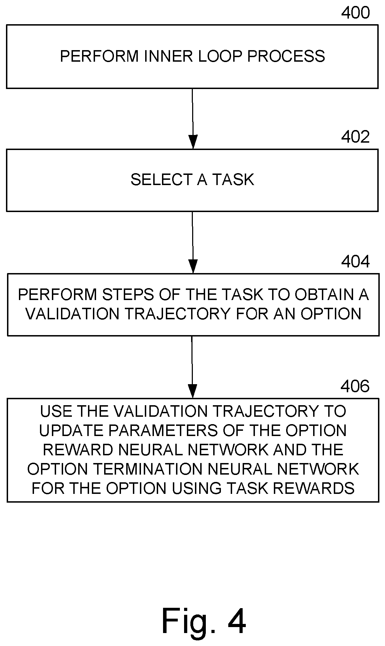

Figure 4 shows an example of the outer loop process; again the process may be performed by one or more computers in one or more locations. This begins by performing the inner loop process, either once or multiple times (step 400). For example the inner loop may be performed up to 10 times before the subsequent outer loop steps.

Once the inner loop has been performed, optionally a new task may be selected; this may but need not be different to the task(s) used for the inner loop (step 402). The task is performed as previously described, that is using the manager neural network to select an option (or an agent action), then using the selected option policy neural network to select the agent actions until termination of the option. In this was the new task is performed for e.g. *m* steps, to obtain a new *m*-step "validation" trajectory (step 404).

The process then trains the option reward neural network and the option termination neural network for the selected option(s) using the validation trajectory, in particular using the task rewards in the validation trajectory (step 406). This may comprise backpropagating gradients of an option reward objective function dependent on the task rewards, through the selected option policy neural network and into the corresponding option reward neural network, to update parameters of the option reward neural network. This may further comprise backpropagating gradients of an option termination objective function dependent on the task rewards, through the selected option policy neural network and into the corresponding option termination neural network, to update parameters of the option termination neural network.

The option reward objective function and the option termination objective function may be any type of reinforcement learning objective function dependent on the task rewards or returns. The same objective function may be used for each of the option reward neural networks and for each of the option termination neural networks. For example if an actor-critic reinforcement learning method is used, updates to the parameter values of the option reward neural network, $\eta^{ro}$, and to the parameter values of the option termination neural network, $\eta^{\beta o}$ can be determined as:

$$\eta^{ro} \leftarrow \eta^{ro} + \alpha_\eta \big( G_t^M - v^M(s_t, g) \big) \cdot \nabla_{\eta^{ro}} \log \pi^o(a_t | s_t)$$

and

$$\eta^{\beta o} \leftarrow \eta^{\beta o} + \alpha_\eta \big( G_t^M - v^M(s_t, g) \big) \cdot \nabla_{\eta^{\beta o}} \log \pi^o(a_t | s_t)$$

where $\nabla_{\eta^{ro}}$ and $\nabla_{\eta^{\beta o}}$ are gradients taken with respect to the parameter values of the respective option reward and option termination neural networks, and $\alpha_\eta$ is a learning rate which may, but need not be the same for the two updates.

In some implementations the equations determining updates to the parameter values of the manager, option policy, option reward, and option termination neural networks may include an entropy regularization term to inhibit premature convergence during training, e.g. a gradient with respect to the parameter values of an entropy bonus, such as a small term depending on a gradient of $-\log \pi(a | s_t)$.

The gradients $\nabla_{\eta^{ro}}$ and $\nabla_{\eta^{\beta o}}$, above, may be referred to as meta-gradients because they update meta-parameters i.e. parameters of the corresponding option reward neural network and option termination neural network which generate the option rewards and option termination values that control the behavior of the selected option policy neural network.

In implementations the option reward neural network and the option termination neural network may be trained to maximize a time-discounted sum of the task rewards, i.e. a return from the environment, e.g. the same return as used in the inner loop to train the manager neural network.

Conceptually the validation trajectory is used to evaluate the options policies learned in the inner loop, and to update the option reward and termination values guiding the learning of these policies. Thus in the inner loop the parameters of the option reward neural networks and option termination neural networks are fixed and updates are made to the parameters of the manager and options policy neural networks. Then in the outer loop a meta-gradient is determined which depends on a change in the outer loop objective with respect to the parameters of the option reward and option termination neural networks, and thus which depends on the effect the updates to the manager and options policy neural networks have on the outer loop objective. The update to the parameters of the option reward and option termination neural networks may be computed by back propagating through the inner loop updates, e.g. storing copies of each of the inner loop updates to the parameters of the selected option policy neural network. In practice this may be achieved by auto-differentiation back through the parameters of the option reward neural network.

The outer loop is performed multiple times, until training is complete e.g. until a maximum number of training time steps is reached. Whilst the outer loop may only update the parameters of the option reward and option termination neural networks corresponding to the selected option, over time the parameters of all the option reward and option termination neural networks are updated.

Implementations of the above described system and method can learn to optimize a different objective for each option policy neural network, as parameterized by the option reward and option termination neural networks. The options are disentangled in the sense that objectives are discovered that are useful across multiple tasks. This can speed up learning of new tasks, and can help to achieve higher rewards during training.

For example, in some implementations the parameters of the option policy, option reward and option termination neural networks may be fixed after some training. The manager neural network may then be trained to perform a new (previously unseen) task, facilitated by the learned options. At this stage the switching cost may be omitted when training the manager neural network.

In general, once the system is trained it may be used to control the agent to perform one or more of the learned tasks in the environment. Also or instead the parameters of the trained option policy, option reward and option termination neural networks may be provided to a second, similar system so that a manager neural network of the second system may be trained to perform one or more tasks using the previously learned options, i.e. using option policy, option reward, and option termination neural networks having the provided parameters.

In situations in which the systems discussed here make use of data potentially including personal information, that data may be treated in one or more ways, such as aggregation and anonymization, before it is stored or used so that such personal information cannot be determined from the data that is stored or used. Furthermore, the use of such information may be such that no personally identifiable information may be determined from the output of the systems that use such information.

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non-transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application-specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand-alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program can be deployed to be executed on one computer or on multiple computers that are located at one site or distributed across multiple sites and interconnected by a data communication network.

In this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read-only memory or a random access memory or both. The elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and compute-intensive parts of machine learning training or production, i.e., inference, workloads.

Machine learning models can be implemented and deployed using a machine learning framework, e.g., a TensorFlow framework.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface, a web browser, or an app through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

**Claims**

1. A computer-implemented system (100) for controlling an agent (102) to perform a plurality of tasks while interacting with an environment (104), wherein the system is configured to, at each of a plurality of time steps, process an input comprising an observation (106) characterizing a current state of the environment to generate an output for selecting an action to be performed by the agent, and receive a task reward (108) in response to the action, the system comprising:

   a manager neural network (120), and a set of option policy neural networks (130) each for selecting a sequence of actions to be performed by the agent according to a respective option policy;
   wherein the manager neural network is configured to, at a time step:

      process the observation and data (110) identifying one of the tasks currently being performed by the agent, according to parameter values of the manager neural network, to generate an output for selecting a manager action from a set of manager actions, wherein the set of manager actions comprises possible actions that can be performed by the agent and a set of option selection actions, each option selection action selecting one of the option policy neural networks;
      wherein each option policy neural network is configured to, at each of a succession of time steps:

         process the observation for the time step, according to an option policy defined by parameter values of the option policy neural network, to generate an output for selecting an action to be performed by the agent;
         wherein, when the selected manager action is an option selection action, the option policy neural network selected by the manager action generates the output for selecting an action for successive time steps until an option termination criterion is met, and when the selected manager action is one of the possible actions that can be performed by the agent the output for selecting the action is the selected manager action; and
         a set of option reward neural networks (140), one for each respective option policy neural network, each configured to, for a time step:

            process the observation, according to parameter values of the option reward neural network, to generate an option reward for the respective option policy neural network;
            wherein the system is configured to train the set of option reward neural networks and the manager neural network using the task rewards, and to train each of the option policy neural networks using the option reward for the respective option policy neural network; and wherein

               i) the environment is a real-world environment, the agent is a mechanical agent interacting with the real-world environment, and the actions comprise control signals to control a physical behavior of the agent; or
               ii) the environment is a real-world environment plant or service facility, the observations include data from one or more sensors monitoring part of the plant or service facility, and the agent controls actions of items of equipment in the real-world environment; or
               iii) the environment is a data packet communications network environment, and the agent comprise a router to route packets of data over the communications network, and the actions comprise data packet routing actions; or
               iv) the environment is a computing environment, the agent is a software agent that manages distribution of compute tasks across computing resources, and the actions comprise assigning compute tasks to particular computing resources.

2. The system of claim 1, wherein the system is configured to train each option reward neural network using the task reward in a meta-gradient training technique in which parameter values of the option reward neural network are adjusted based on the agent's interaction with the environment under control of the respective option policy neural network, to optimize a return from the environment.

3. The system of claim 1 or 2, wherein the system is configured to train the set of option reward neural networks and the manager neural network using the task rewards, and to train each of the option policy neural networks using the option reward for the respective option policy neural network by,
after the option selection action and for a succession of time steps until the termination criterion is met:

updating the parameter values of the manager neural network using the task rewards, and
updating the parameter values of the respective option policy neural network selected by the option selection action using the option reward for the respective option policy neural network; then
after the termination criterion is met:
updating the parameter values of the option reward neural network for the respective option policy neural network using the task rewards.

4. The system of claim 3, wherein updating the parameter values of the option reward neural network for the respective option policy neural network using the task rewards comprises:

generating a trajectory comprising a sequence of one or more actions selected by the respective option policy neural network selected by the option selection action, and corresponding observations and task rewards; and
updating the parameter values of the option reward neural network for the respective option policy neural network using the task rewards from the trajectory.

5. The system of claim 4, wherein updating the parameter values of the option reward neural network for the respective option policy neural network using the task rewards from the trajectory comprises back propagating gradients of an option reward objective function based on the task rewards from the trajectory through the respective option policy neural network and through the option reward neural network for the respective option policy neural network.

6. The system of any of claims 3-5, wherein updating one or more of the parameter values of the manager neural network, the parameter values of the respective option policy neural network, and the parameter values of the option reward neural network, comprises updating based on an $n$-step return.

7. The system of any of claims 3-6, wherein updating the parameter values of the manager neural network using the task rewards comprises backpropagating gradients of a manager objective function, wherein updating the parameter values of the respective option policy neural network comprises backpropagating gradients of an option policy objective function, and wherein the manager objective function and option policy objective function each comprise a respective reinforcement learning objective function; in particular wherein the gradients of the manager objective function and of the option policy objective function comprise respective policy gradients.

8. The system of any of claims 1-7 further comprising a set of option termination neural networks (150), one for each respective option policy neural network, each configured to, at each of the time steps:

process the observation, according to parameter values of the option reward neural network, to generate an option termination value for the respective option policy neural network,
wherein, for each option reward neural network, the option termination value determines whether the option termination criterion is met.

9. The system of claim 8, wherein the system is configured to train the option termination neural networks using the task rewards in a meta-gradient training technique in which parameter values of the option termination neural network are adjusted based on the agents interaction with the environment under control of the respective option policy neural network, to optimize a return from the environment.

10. The system of claim 8 or 9, wherein the system is configured to train the set of option termination neural networks by, after the termination criterion is met for a respective option policy neural network:
updating the parameter values of the option termination neural network for the respective option policy neural network using the task rewards.

11. The system of claim 10, wherein updating the parameter values of the option termination neural network for the respective option policy neural network using the task rewards comprises:

generating a trajectory comprising a sequence of one or more actions selected by the respective option policy neural network selected by the option selection action, and corresponding observations and task rewards; and updating the parameter values of the option termination neural network for the respective option policy neural network using the task rewards from the trajectory, in particular by back propagating gradients of an option termination objective function based on the task rewards from the trajectory through the respective option policy neural network and through the option termination neural network for the respective option policy neural network.

12. The system of any of claims 1-11, wherein the system is configured to train the manager neural network dependent on an estimated return comprising the expected task rewards from the environment when selecting manager actions according to current parameter values of the manager neural network and on a switching cost, in particular wherein the switching cost is configured to reduce the task reward or return used to update the parameter values of the manager neural network.

13. A computer-implemented method of training a system (100) used to control an agent (102) to perform a plurality of tasks while interacting with an environment (104), wherein the system is configured to, at each of a plurality of time steps, process an input comprising an observation (106) characterizing a current state of the environment to generate an output for selecting an action to be performed by the agent, and receive a task reward (108) in response to the action, the method comprising:

obtaining an observation and task identification data (110) identifying one of the tasks currently being performed by the agent; processing the observation and task identification data, according to parameter values of a manager neural network (120), to generate an output for selecting a manager action from a set of manager actions, wherein the set of manager actions comprises possible actions that can be performed by the agent and a set of option selection actions, each option selection action for selecting one of a set of option policy neural networks (130); when the selected manager action is one of the possible actions that can be performed by the agent using the selected manager action to generate an output for selecting an action to be performed by the agent, and when the selected manager action is an option selection action selecting an option policy neural network and, for successive time steps until an option termination criterion is met, processing the observation for the time step according to an option policy defined by parameter values of the selected option policy neural network, to generate the output for selecting the action to be performed by the agent; maintaining a set of option reward neural networks (140), one for each respective option policy neural network and, based on processing of the observations for the successive time steps by the selected option policy neural network, training the selected option policy neural network using option rewards generated by processing the observations according to parameter values of the respective option reward neural network, and training the manager neural network using the task rewards; and after processing of the observations for the successive time steps by the selected option policy neural network, training the respective option reward neural network using the task rewards; and wherein

i) the environment is a real-world environment, the agent is a mechanical agent interacting with the real-world environment, and the actions comprise control signals to control a physical behavior of the agent; or ii) the environment is a real-world environment plant or service facility, the observations include data from one or more sensors monitoring part of the plant or service facility, and the agent controls actions of items of equipment in the real-world environment; or iii) the environment is a data packet communications network environment, and the agent comprise a router to route packets of data over the communications network, and the actions comprise data packet routing actions; or iv) the environment is a computing environment, the agent is a software agent that manages distribution of compute tasks across computing resources, and the actions comprise assigning compute tasks to particular computing resources.

14. The method of claim 13, further comprising:

maintaining a set of option termination neural networks (150), one for each respective option policy neural network, each providing an option termination value according to parameter values of the option termination neural network that determines whether the option termination criterion is met for the respective option policy neural network, and

fixing the parameter values of the option termination neural network during processing of the observations for the successive time steps by the selected option policy neural network, and

after processing of the observations for the successive time steps by the selected option policy neural network, training the respective option termination neural network using the task rewards.

15. Computer-readable instructions, or one or more computer storage media storing computer-readable instructions, that when executed by one or more computers cause the one or more computers to implement the system of any one of claims 1-12 or the method of any one of claims 13-14.

**Patentansprüche**

1. Computerimplementiertes System (100) zum Steuern eines Agenten (102) zum Durchführen einer Vielzahl von Aufgaben während er mit einer Umgebung (104) interagiert, wobei das System dazu konfiguriert ist, in jedem einer Vielzahl von Zeitschritten eine Eingabe zu verarbeiten, die eine Beobachtung (106) umfasst, die einen aktuellen Zustand der Umgebung kennzeichnet, um eine Ausgabe zum Auswählen einer durch den Agenten durchzuführenden Aktion zu erzeugen, und eine Aufgabenbelohnung (108) als Reaktion auf die Aktion zu empfangen, wobei das System Folgendes umfasst:

ein neuronales Verwaltungsnetz (120) und einen Satz neuronaler Optionsrichtliniennetze (130), die jeweils zum Auswählen einer Sequenz von Aktionen dienen, die durch den Agenten gemäß einer jeweilige Optionsrichtlinie durchzuführen sind;

wobei das neuronale Verwalternetz in einem Zeitschritt zu Folgendem dazu konfiguriert ist:

Verarbeiten der Beobachtung und der Daten (110), die eine der aktuell durch den Agenten durchgeführten Aufgaben identifizieren, gemäß den Parameterwerten des neuronalen Verwaltungsnetzes, um eine Ausgabe zum Auswählen einer Verwaltungsaktion aus einem Satz von Verwaltungsaktionen zu erzeugen, wobei der Satz von Verwaltungsaktionen mögliche Aktionen, die durch den Agenten durchgeführt werden können, und einen Satz von Optionsauswahlaktionen umfasst, wobei jede Optionsauswahlaktion eines der neuronalen Optionsrichtliniennetze auswählt;

wobei jedes neuronale Optionsrichtliniennetz in jedem einer Folge von Zeitschritten zu Folgendem konfiguriert ist:

Verarbeiten der Beobachtung für den Zeitschritt gemäß einer Optionsrichtlinie, die durch Parameterwerte des neuronalen Optionsrichtliniennetzes definiert ist, um eine Ausgabe zum Auswählen einer von dem Agenten auszuführenden Aktion zu erzeugen;

wobei, wenn die ausgewählte Verwalteraktion eine Optionsauswahlaktion ist, das durch die Verwalteraktion ausgewählte neuronale Optionsrichtliniennetz die Ausgabe zum Auswählen einer Aktion für aufeinanderfolgende Zeitschritte erzeugt, bis ein Optionsbeendigungskriterium erfüllt ist, und wenn die ausgewählte Verwalteraktion eine der möglichen Aktionen ist, die durch den Agenten durchgeführt werden können, die Ausgabe zum Auswählen der Aktion die ausgewählte Verwalteraktion ist; und einen Satz neuronaler Optionsbelohnungsnetze (140), eines für jedes jeweilige neuronale Optionsrichtliniennetz, die für einen Zeitschritt jeweils zu Folgendem konfiguriert sind:

Verarbeiten der Beobachtung gemäß den Parameterwerten des neuronalen Optionsbelohnungsnetzes, um eine Optionsbelohnung für das jeweilige neuronale Optionsrichtliniennetz zu erzeugen; wobei das System dazu konfiguriert ist, den Satz von neuronalen Optionsbelohnungsnetzen und das neuronale Verwalternetz unter Verwendung der Aufgabenbelohnungen zu trainieren und jedes der neuronalen Optionsrichtliniennetze unter Verwendung der Optionsbelohnung für das jeweilige neuronale Optionsrichtliniennetz zu trainieren; und wobei

i) die Umgebung eine Realweltumgebung ist, der Agent ein mechanischer Agent ist, der mit der Realweltumgebung interagiert, und die Aktionen Steuersignale zum Steuern eines physischen Verhaltens des Agenten umfassen; oder

ii) die Umgebung eine Realweltumgebungsanlage oder - dienstleistungseinrichtung ist, die Beobachtungen Daten von einem oder mehreren Sensoren beinhalten, die einen Teil der Anlage oder Dienstleistungseinrichtung überwachen, und der Agent Aktionen von Ausrüstungsgegenständen in der Realweltumgebung steuert; oder

iii) die Umgebung eine Datenpaket-Kommunikationsnetzumgebung ist und der Agent einen Router umfasst, um Datenpakete über das Kommunikationsnetz zu routen, und die Aktionen Datenpaket-Routing-Aktionen umfassen; oder

iv) die Umgebung eine Rechenumgebung ist, der Agent ein Software-Agent ist, der die Verteilung von Rechenaufgaben auf Rechenressourcen verwaltet, und die Aktionen Zuweisen von Rechenaufgaben zu bestimmten Rechenressourcen umfassen.

2. System nach Anspruch 1, wobei das System dazu konfiguriert ist, jedes neuronale Optionsbelohnungsnetz unter Verwendung der Aufgabenbelohnung in einer Meta-Gradienten-Trainingstechnik zu trainieren, in der Parameterwerte des neuronalen Optionsbelohnungsnetzes basierend auf der Interaktion des Agenten mit der Umgebung unter Steuerung des jeweiligen neuronalen Optionsrichtliniennetzes angepasst werden, um eine Rückgabe aus der Umgebung zu optimieren.

3. System nach Anspruch 1 oder 2, wobei das System dazu konfiguriert ist, den Satz von neuronalen Optionsbelohnungsnetzen und das neuronale Verwalternetz unter Verwendung der Aufgabenbelohnungen zu trainieren und jedes der neuronalen Optionsrichtliniennetze unter Verwendung der Optionsbelohnung für das jeweilige neuronale Optionsrichtliniennetz zu trainieren, indem

nach der Optionsauswahlaktion und für eine Folge von Zeitschritten, bis das Beendigungskriterium erfüllt ist, Folgendes vorgenommen wird:

Aktualisieren der Parameterwerte des neuronalen Verwaltungsnetzes unter Verwendung der Aufgabenbelohnungen und Aktualisieren der Parameterwerte des jeweiligen neuronalen Optionsrichtliniennetzes, das durch die Optionsauswahlaktion ausgewählt wurde, unter Verwendung der Optionsbelohnung für das jeweilige neuronale Optionsrichtliniennetz; dann

nachdem das Beendigungskriterium erfüllt ist:

Aktualisieren der Parameterwerte des neuronalen Optionsbelohnungsnetzes für das jeweilige neuronale Optionsrichtliniennetz unter Verwendung der Aufgabenbelohnungen.

4. System nach Anspruch 3, wobei das Aktualisieren der Parameterwerte des neuronalen Optionsbelohnungsnetzes für das jeweilige neuronale Optionsrichtliniennetz unter Verwendung der Aufgabenbelohnungen Folgendes umfasst:

Erzeugen einer Trajektorie, die eine Sequenz aus einer oder mehreren Aktionen, die durch das jeweilige neuronale Optionsrichtliniennetz ausgewählt wurden, das durch die Optionsauswahlaktion ausgewählt wurde, und entsprechende Beobachtungen und Aufgabenbelohnungen umfasst; und

Aktualisieren der Parameterwerte des neuronalen Optionsbelohnungsnetzes für das jeweilige neuronale Optionsrichtliniennetz unter Verwendung der Aufgabenbelohnungen aus der Trajektorie.

5. System nach Anspruch 4, wobei das Aktualisieren der Parameterwerte des neuronalen Optionsbelohnungsnetzes für das jeweilige neuronale Optionsrichtliniennetz unter Verwendung der Aufgabenbelohnungen aus der Trajektorie das Rückwärtspropagieren von Gradienten einer neuronalen Optionsbelohnungszielfunktion basierend auf den Aufgabenbelohnungen aus der Trajektorie durch das jeweilige neuronale Optionsrichtliniennetz und durch das neuronale Optionsbelohnungsnetz für das jeweilige neuronale Optionsrichtliniennetz umfasst.

6. System nach einem der Ansprüche 3-5, wobei das Aktualisieren eines oder mehrerer Parameterwerte des neuronalen Verwalternetzes, der Parameterwerte des jeweiligen neuronalen Optionsrichtliniennetzes und der Parameterwerte des neuronalen Optionsbelohnungsnetzes das Aktualisieren basierend auf einer n-Schritt-Rendite umfasst.

7. System nach einem der Ansprüche 3-6, wobei das Aktualisieren der Parameterwerte des neuronalen Verwalternetzes unter Verwendung der Aufgabenbelohnungen das Rückwärtspropagieren von Gradienten einer Verwalterzielfunktion umfasst, wobei das Aktualisieren der Parameterwerte des jeweiligen neuronalen Optionsrichtliniennetzes das Rückwärtspropagieren von Gradienten einer Optionsrichtlinienzielfunktion umfasst und wobei die Verwalterzielfunktion und die Optionsrichtlinienzielfunktion jeweils eine jeweilige Verstärkungslernzielfunktion umfassen; insbesondere wobei die Gradienten der Verwalterzielfunktion und der Optionsrichtlinienzielfunktion jeweilige Richtliniengradienten umfassen.

8. System nach einem der Ansprüche 1-7, ferner umfassend einen Satz von neuronalen Beendigungsnetzen (150) für Optionen, eines für jedes jeweilige neuronale Optionsrichtliniennetz, wobei jedes in jedem der Zeitschritte zu Folgendem konfiguriert ist:

Verarbeiten der Beobachtung gemäß den Parameterwerten des neuronalen Optionsbelohnungsnetzes, um einen Optionsbeendigungswert für das jeweilige neuronale Optionsrichtliniennetz zu erzeugen, wobei für jedes neuronale Optionsbelohnungsnetz der Optionsbeendigungswert bestimmt, ob das Optionsbeendigungskriterium erfüllt ist.

9. System nach Anspruch 8, wobei das System dazu konfiguriert ist, die neuronalen Optionsbeendigungsnetze unter Verwendung der Aufgabenbelohnungen in einer Meta-Gradienten-Trainingstechnik zu trainieren, in der Parameterwerte des neuronalen Optionsbeendigungsnetzes basierend auf der Interaktion der Agenten mit der Umgebung unter der Steuerung des jeweiligen neuronalen Optionsrichtliniennetzes angepasst werden, um eine Rückgabe aus der Umgebung zu optimieren.

10. Das System nach Anspruch 8 oder 9, wobei das System dazu konfiguriert ist, den Satz von neuronalen Optionsbeendigungsnetzen zu trainieren, indem nach Erfüllung des Beendigungskriteriums für ein jeweiliges neuronales Optionsrichtliniennetz Folgendes vorgenomen wird:
Aktualisieren der Parameterwerte des neuronalen Optionsbeendigungsnetzes für das jeweilige neuronale Optionsrichtliniennetz unter Verwendung der Aufgabenbelohnungen.

11. System nach Anspruch 10, wobei das Aktualisieren der Parameterwerte des neuronalen Optionsbeendigungsnetzes für das jeweilige neuronale Optionsrichtliniennetz unter Verwendung der Aufgabenbelohnungen Folgendes umfasst:

Erzeugen einer Trajektorie, die eine Sequenz aus einer oder mehreren Aktionen, die durch das jeweilige neuronale Optionsrichtliniennetz ausgewählt wurden, das durch die Optionsauswahlaktion ausgewählt wurde, und entsprechende Beobachtungen und Aufgabenbelohnungen umfasst; und
Aktualisieren der Parameterwerte des neuronalen Optionsbeendigungsnetzes für das jeweilige neuronale Optionsrichtliniennetz unter Verwendung der Aufgabenbelohnungen aus der Trajektorie, insbesondere durch das Rückwärtspropagieren von Gradienten einer neuronalen Optionsbeendigungszielfunktion basierend auf den Aufgabenbelohnungen aus der Trajektorie durch das jeweilige neuronale Optionsrichtliniennetz und durch das neuronale Optionsbeendigungsnetz für das jeweilige neuronale Optionsrichtliniennetz.

12. System nach einem der Ansprüche 1-11, wobei das System dazu konfiguriert ist, das neuronale Verwalternetz abhängig von einer geschätzten Rendite, die die erwarteten Aufgabenbelohnungen aus der Umgebung bei der Auswahl von Verwalteraktionen gemäß aktuellen Parameterwerten des neuronalen Verwalternetzes umfasst, und von Umschaltkosten zu trainieren, wobei insbesondere die Umschaltkosten dazu konfiguriert sind, die Aufgabenbelohnung oder Rendite zu verringern, die zur Aktualisierung der Parameterwerte des neuronalen Verwalternetzes verwendet wird.

13. Computerimplementiertes Verfahren zum Trainieren eines Systems (100), das verwendet wird, um einen Agenten (102) zu steuern, um eine Vielzahl von Aufgaben durchzuführen, während er mit einer Umgebung (104) interagiert, wobei das System dazu konfiguriert ist, in jedem einer Vielzahl von Zeitschritten eine Eingabe zu verarbeiten, die eine Beobachtung (106) umfasst, die einen aktuellen Zustand der Umgebung kennzeichnet, um eine Ausgabe zum Auswählen einer durch den Agenten durchzuführenden Aktion zu erzeugen, und eine Aufgabenbelohnung (108) als Reaktion auf die Aktion zu empfangen, wobei das Verfahren Folgendes umfasst:

Erlangen einer Beobachtung und von Aufgabenidentifizierungsdaten (110), die eine der aktuell durch den Agenten durchgeführten Aufgaben identifizieren;
Verarbeiten der Beobachtungs- und Aufgabenidentifizierungsdaten gemäß den Parameterwerten eines neuronalen Verwalternetzes (120), um eine Ausgabe zum Auswählen einer Verwalteraktion aus einem Satz von Verwalteraktionen zu erzeugen,
wobei der Satz von Verwalteraktionen mögliche Aktionen umfasst, die durch den Agenten durchgeführt werden können, und einen Satz von Optionsauswahlaktionen, wobei jede Optionsauswahlaktion zum Auswählen eines aus einem Satz von neuronalen Optionsrichtliniennetzen (130) dient;
wenn die ausgewählte Verwalteraktion eine der möglichen Aktionen ist, die durch den Agenten unter Verwendung der ausgewählten Verwalteraktion durchgeführt werden können, um eine Ausgabe zum Auswählen einer durch den Agenten durchzuführenden Aktion zu erzeugen, und

wenn die ausgewählte Verwalteraktion eine Optionsauswahlaktion ist, Auswählen eines neuronalen Optionsrichtliniennetzes und, für aufeinanderfolgende Zeitschritte, bis ein Optionsbeendigungskriterium erfüllt ist, Verarbeiten der Beobachtung für den Zeitschritt gemäß einer Optionsrichtlinie, die durch Parameterwerte des ausgewählten neuronalen Optionsrichtliniennetzes definiert ist, um die Ausgabe zum Auswählen der durch den Agenten durchzuführenden Aktion zu erzeugen;

Halten eines Satzes von neuronalen Optionsbelohnungsnetzen (140), eines für jedes jeweilige neuronale Optionsrichtliniennetz und

basierend auf dem Verarbeiten der Beobachtungen für die aufeinanderfolgenden Zeitschritte durch das ausgewählte neuronale Optionenrichtliniennetz,

Trainieren des ausgewählten neutralen Netzes für Optionsrichtlinien unter Verwendung von Optionsbelohnungen, die durch das Verarbeiten der Beobachtungen gemäß den Parameterwerten des jeweiligen neutralen Optionsbelohnungsnetzes erzeugt werden, und

Trainieren des neuronalen Verwaltungsnetzes unter Verwendung der Aufgabenbelohnungen und

nach dem Verarbeiten der Beobachtungen für die aufeinanderfolgenden Zeitschritte durch das ausgewählte neuronale Optionsrichtliniennetz, Trainieren des jeweiligen neuronalen Optionsbelohnungsnetzes unter Verwendung der Aufgabenbelohnungen; und wobei

i) die Umgebung eine Realweltumgebung ist, der Agent ein mechanischer Agent ist, der mit der Realweltumgebung interagiert, und die Aktionen Steuersignale zum Steuern eines physischen Verhaltens des Agenten umfassen; oder

ii) die Umgebung eine Realweltumgebungsanlage oder - dienstleistungseinrichtung ist, die Beobachtungen Daten von einem oder mehreren Sensoren beinhalten, die einen Teil der Anlage oder Dienstleistungseinrichtung überwachen, und der Agent Aktionen von Ausrüstungsgegenständen in der Realweltumgebung steuert; oder

iii) die Umgebung eine Datenpaket-Kommunikationsnetzumgebung ist und der Agent einen Router umfasst, um Datenpakete über das Kommunikationsnetz zu routen, und die Aktionen Datenpaket-Routing-Aktionen umfassen; oder

iv) die Umgebung eine Rechenumgebung ist, der Agent ein Software-Agent ist, der die Verteilung von Rechenaufgaben auf Rechenressourcen verwaltet, und die Aktionen Zuweisen von Rechenaufgaben zu bestimmten Rechenressourcen umfassen.

14. Verfahren nach Anspruch 13, ferner umfassend:

Halten eines Satzes von neuronalen Optionsbeendigungsnetzen (150), eines für jedes jeweilige neuronale Optionsrichtliniennetz, wobei jedes einen Optionsbeendigungswert gemäß den Parameterwerten des neuronalen Optionsbeendigungsnetzes bereitstellt, das bestimmt, ob das Optionsbeendigungskriterium für das jeweilige neuronale Optionsrichtliniennetz erfüllt ist, und

Festlegen der Parameterwerte des neuronalen Optionsbeendigungsnetzes während der Verarbeitung der Beobachtungen für die aufeinanderfolgenden Zeitschritte durch das ausgewählte neuronale Optionsrichtliniennetz, und

nach dem Verarbeiten der Beobachtungen für die aufeinanderfolgenden Zeitschritte durch das ausgewählte neuronale Optionsrichtliniennetz, Trainieren des jeweiligen neuronalen Optionsbeendigungsnetzes unter Verwendung der Aufgabenbelohnungen.

15. Computerlesbare Anweisungen oder ein oder mehrere Computerspeichermedien, die computerlesbare Anweisungen speichern, die, wenn sie durch einen oder mehrere Computer ausgeführt werden, die einen oder mehreren Computer veranlassen, das System nach einem der Ansprüche 1-12 oder das Verfahren nach einem der Ansprüche 13-14 zu implementieren.

## Revendications

1. Système mis en œuvre par ordinateur (100) permettant de commander un agent (102) pour réaliser une pluralité de tâches tout en interagissant avec un environnement (104), dans lequel le système est configuré pour, à chacune d'une pluralité d'étapes temporelles, traiter une entrée comprenant une observation (106) caractérisant un état actuel de l'environnement pour générer une sortie permettant de sélectionner une action à réaliser par l'agent, et recevoir une récompense de tâche (108) en réponse à l'action, le système comprenant :

un réseau neuronal de gestionnaire (120) et un ensemble de réseaux neuronaux de politique d'option (130), chacun permettant de sélectionner une séquence d'actions à réaliser par l'agent selon une politique d'option respective ;

dans lequel le réseau neuronal de gestionnaire est configuré pour, à une étape temporelle :

traiter l'observation et des données (110) identifiant l'une des tâches étant actuellement réalisées par l'agent, selon des valeurs de paramètre du réseau neuronal de gestionnaire, pour générer une sortie permettant de sélectionner une action de gestionnaire à partir d'un ensemble d'actions de gestionnaire, dans lequel l'ensemble d'actions de gestionnaire comprend des actions possibles qui peuvent être réalisées par l'agent et un ensemble d'actions de sélection d'option, chaque action de sélection d'option sélectionnant l'un des réseaux neuronaux de politique d'option ;

dans lequel chaque réseau neuronal de politique d'option est configuré pour, à chacune d'une succession d'étapes temporelles :

traiter l'observation pour l'étape temporelle, selon une politique d'option définie par des valeurs de paramètre du réseau neuronal de politique d'option, pour générer une sortie permettant de sélectionner une action à réaliser par l'agent ;

dans lequel, lorsque l'action de gestionnaire sélectionnée est une action de sélection d'option, le réseau neuronal de politique d'option sélectionné par l'action de gestionnaire génère la sortie permettant de sélectionner une action pour des étapes temporelles successives jusqu'à ce qu'un critère de terminaison d'option soit satisfait, et lorsque l'action de gestionnaire sélectionnée est l'une des actions possibles qui peuvent être réalisées par l'agent, la sortie permettant de sélectionner l'action est l'action de gestionnaire sélectionnée ; et

un ensemble de réseaux neuronaux de récompense d'option (140), un pour chaque réseau neuronal de politique d'option respectif, chacun étant configuré pour, pour une étape temporelle :

traiter l'observation, selon des valeurs de paramètre du réseau neuronal de récompense d'option, pour générer une récompense d'option pour le réseau neuronal de politique d'option respectif ;

dans lequel le système est configuré pour entraîner l'ensemble de réseaux neuronaux de récompense d'option et le réseau neuronal de gestionnaire à l'aide des récompenses de tâche, et pour entraîner chacun des réseaux neuronaux de politique d'option à l'aide de la récompense d'option pour le réseau neuronal de politique d'option respectif ; et dans lequel

i) l'environnement est un environnement du monde réel, l'agent est un agent mécanique interagissant avec l'environnement du monde réel, et les actions comprennent des signaux de commande pour commander un comportement physique de l'agent ; ou

ii) l'environnement est une usine ou une installation de service de l'environnement du monde réel, les observations comportent des données provenant d'un ou de plusieurs capteurs surveillant une partie de l'usine ou de l'installation de service, et l'agent commande les actions des éléments d'équipement dans l'environnement du monde réel ; ou

iii) l'environnement est un environnement de réseau de communication par paquets de données, et l'agent comprend un routeur pour acheminer des paquets de données sur le réseau de communication, et les actions comprennent des actions de routage de paquets de données ; ou

iv) l'environnement est un environnement informatique, l'agent est un agent logiciel qui gère la distribution de tâches de calcul entre des ressources informatiques, et les actions comprennent l'attribution de tâches de calcul à des ressources informatiques particulières.

2. Système selon la revendication 1, dans lequel le système est configuré pour entraîner chaque réseau neuronal de récompense d'option à l'aide de la récompense de tâche dans une technique d'entraînement à métagradients dans laquelle des valeurs de paramètre du réseau neuronal de récompense d'option sont réglées sur la base de l'interaction de l'agent avec l'environnement sous la commande du réseau neuronal de politique d'option respectif, pour optimiser un retour de l'environnement.

3. Système selon la revendication 1 ou 2, dans lequel le système est configuré pour entraîner l'ensemble de réseaux neuronaux de récompense d'option et le réseau neuronal de gestionnaire à l'aide des récompenses de tâche, et pour entraîner chacun des réseaux neuronaux de politique d'option à l'aide de la récompense d'option pour le réseau neuronal de politique d'option respectif par,

après l'action de sélection d'option et pour une succession d'étapes temporelles jusqu'à ce que le critère de terminaison soit satisfait :

la mise à jour des valeurs de paramètre du réseau neuronal de gestionnaire à l'aide des récompenses de tâche, et la mise à jour des valeurs de paramètre du réseau neuronal de politique d'option respectif sélectionné par l'action de sélection d'option à l'aide de la récompense d'option pour le réseau neuronal de politique d'option respectif ; puis une fois que le critère de terminaison est satisfait :
la mise à jour des valeurs de paramètre du réseau neuronal de récompense d'option pour le réseau neuronal de politique d'option respectif à l'aide des récompenses de tâche.

4. Système selon la revendication 3, dans lequel la mise à jour des valeurs de paramètre du réseau neuronal de récompense d'option pour le réseau neuronal de politique d'option respectif à l'aide des récompenses de tâche comprend :

la génération d'une trajectoire comprenant une séquence d'une ou de plusieurs actions sélectionnées par le réseau neuronal de politique d'option respectif sélectionné par l'action de sélection d'option, et les observations et récompenses de tâche correspondantes ; et
la mise à jour des valeurs de paramètre du réseau neuronal de récompense d'option pour le réseau neuronal de politique d'option respectif à l'aide des récompenses de tâche de la trajectoire.

5. Système selon la revendication 4, dans lequel la mise à jour des valeurs de paramètre du réseau neuronal de récompense d'option pour le réseau neuronal de politique d'option respectif à l'aide des récompenses de tâche de la trajectoire comprend la rétropropagation de gradients d'une fonction objective de récompense d'option sur la base des récompenses de tâche de la trajectoire à travers le réseau neuronal de politique d'option respectif et à travers le réseau neuronal de récompense d'option pour le réseau neuronal de politique d'option respectif.

6. Système selon l'une quelconque des revendications 3 à 5, dans lequel la mise à jour d'une ou de plusieurs des valeurs de paramètre du réseau neuronal de gestionnaire, des valeurs de paramètre du réseau neuronal de politique d'option respectif et des valeurs de paramètre du réseau neuronal de récompense d'option, comprend une mise à jour sur la base d'un retour en n étapes.

7. Système selon l'une quelconque des revendications 3 à 6, dans lequel la mise à jour des valeurs de paramètre du réseau neuronal de gestionnaire à l'aide des récompenses de tâche comprend la rétropropagation de gradients d'une fonction objective de gestionnaire, dans lequel la mise à jour des valeurs de paramètre du réseau neuronal de politique d'option respectif comprend la rétropropagation de gradients d'une fonction objective de politique d'option, et dans lequel la fonction objective de gestionnaire et la fonction objective de politique d'option comprennent chacune une fonction objective d'apprentissage de renforcement respective ; en particulier dans lequel les gradients de la fonction objective de gestionnaire et de la fonction objective de politique d'option comprennent des gradients de politique respectifs.

8. Système selon l'une quelconque des revendications 1 à 7, comprenant également un ensemble de réseaux neuronaux de terminaison d'option (150), un pour chaque réseau neuronal de politique d'option respectif, chacun étant configuré pour, à chacune des étapes temporelles :

traiter l'observation, selon des valeurs de paramètre du réseau neuronal de récompense d'option, pour générer une valeur de terminaison d'option pour le réseau neuronal de politique d'option respectif,
dans lequel, pour chaque réseau neuronal de récompense d'option, la valeur de terminaison d'option détermine si le critère de terminaison d'option est satisfait.

9. Système selon la revendication 8, dans lequel le système est configuré pour entraîner les réseaux neuronaux de terminaison d'option à l'aide des récompenses de tâche dans une technique d'entraînement à métagradients dans laquelle des valeurs de paramètre du réseau neuronal de terminaison d'option sont réglées sur la base de l'interaction des agents avec l'environnement sous la commande du réseau neuronal de politique d'option respectif, pour optimiser un retour de l'environnement.

10. Système selon la revendication 8 ou 9, dans lequel le système est configuré pour entraîner l'ensemble de réseaux neuronaux de terminaison d'option par, une fois que le critère de terminaison est satisfait pour un réseau neuronal de politique d'option respectif :

la mise à jour des valeurs de paramètre du réseau neuronal de terminaison d'option pour le réseau neuronal de politique d'option respectif à l'aide des récompenses de tâche.

11. Système selon la revendication 10, dans lequel la mise à jour des valeurs de paramètre du réseau neuronal de terminaison d'option pour le réseau neuronal de politique d'option respectif à l'aide des récompenses de tâche comprend :

la génération d'une trajectoire comprenant une séquence d'une ou de plusieurs actions sélectionnées par le réseau neuronal de politique d'option respectif sélectionné par l'action de sélection d'option, et les observations et récompenses de tâche correspondantes ; et
la mise à jour des valeurs de paramètre du réseau neuronal de terminaison d'option pour le réseau neuronal de politique d'option respectif à l'aide des récompenses de tâche de la trajectoire, en particulier la rétropropagation de gradients d'une fonction objective de terminaison d'option sur la base des récompenses de tâche de la trajectoire à travers le réseau neuronal de politique d'option respectif et à travers le réseau neuronal de terminaison d'option pour le réseau neuronal de politique d'option respectif.

12. Système selon l'une quelconque des revendications 1 à 11, dans lequel le système est configuré pour entraîner le réseau neuronal de gestionnaire en fonction d'un retour estimé comprenant les récompenses de tâche attendues de l'environnement lors de la sélection d'actions de gestionnaire selon des valeurs de paramètre actuelles du réseau neuronal de gestionnaire et un coût de commutation, en particulier dans lequel le coût de commutation est configuré pour réduire la récompense de tâche ou le retour utilisé pour mettre à jour les valeurs de paramètre du réseau neuronal de gestionnaire.

13. Procédé d'entraînement d'un système mis en œuvre par ordinateur (100) utilisé pour commander un agent (102) pour réaliser une pluralité de tâches tout en interagissant avec un environnement (104), dans lequel le système est configuré pour, à chacune d'une pluralité d'étapes temporelles, traiter une entrée comprenant une observation (106) caractérisant un état actuel de l'environnement pour générer une sortie permettant de sélectionner une action à réaliser par l'agent, et recevoir une récompense de tâche (108) en réponse à l'action, le procédé comprenant :

l'obtention d'une observation et de données d'identification de tâche (110) identifiant l'une des tâches étant actuellement réalisées par l'agent ;
le traitement de l'observation et des données d'identification de tâche, selon des valeurs de paramètre d'un réseau neuronal de gestionnaire (120), pour générer une sortie permettant de sélectionner une action de gestionnaire à partir d'un ensemble d'actions de gestionnaire,
dans lequel l'ensemble d'actions de gestionnaire comprend des actions possibles qui peuvent être réalisées par l'agent et un ensemble d'actions de sélection d'option, chaque action de sélection d'option permettant de sélectionner l'un d'un ensemble de réseaux neuronaux de politique d'option (130) ;
lorsque l'action de gestionnaire sélectionnée est l'une des actions possibles qui peuvent être réalisées par l'agent à l'aide de l'action de gestionnaire sélectionnée pour générer une sortie permettant de sélectionner une action à réaliser par l'agent, et
lorsque l'action de gestionnaire sélectionnée est une action de sélection d'option sélectionnant un réseau neuronal de politique d'option et, pour des étapes temporelles successives jusqu'à ce qu'un critère de terminaison d'option soit satisfait, le traitement de l'observation pour l'étape temporelle selon une politique d'option définie par des valeurs de paramètre du réseau neuronal de politique d'option sélectionné, pour générer la sortie permettant de sélectionner l'action à réaliser par l'agent ;
la conservation d'un ensemble de réseaux neuronaux de récompense d'option (140), un pour chaque réseau neuronal de politique d'option respectif et,
sur la base du traitement des observations pour les étapes temporelles successives par le réseau neuronal de politique d'option sélectionné,
l'entraînement du réseau neuronal de politique d'option sélectionné à l'aide de récompenses d'option générées par le traitement des observations selon des valeurs de paramètre du réseau neuronal de récompense d'option respectif, et
l'entraînement du réseau neuronal de gestionnaire à l'aide des récompenses de tâche ; et
après le traitement des observations pour les étapes temporelles successives par le réseau neuronal de politique d'option sélectionné, l'entraînement du réseau neuronal de récompense d'option respectif à l'aide des récompenses de tâche ; et dans lequel

i) l'environnement est un environnement du monde réel, l'agent est un agent mécanique interagissant avec l'environnement du monde réel, et les actions comprennent des signaux de commande pour commander un comportement physique de l'agent ; ou

ii) l'environnement est une usine ou une installation de service de l'environnement du monde réel, les observations comportent des données provenant d'un ou de plusieurs capteurs surveillant une partie de l'usine ou de l'installation de service, et l'agent commande les actions des éléments d'équipement dans l'environnement du monde réel ; ou

iii) l'environnement est un environnement de réseau de communication par paquets de données, et l'agent comprend un routeur pour acheminer des paquets de données sur le réseau de communication, et les actions comprennent des actions de routage de paquets de données ; ou

iv) l'environnement est un environnement informatique, l'agent est un agent logiciel qui gère la distribution de tâches de calcul entre des ressources informatiques, et les actions comprennent l'attribution de tâches de calcul à des ressources informatiques particulières.

14. Procédé selon la revendication 13, comprenant également :

la conservation d'un ensemble de réseaux neuronaux de terminaison d'option (150), un pour chaque réseau neuronal de politique d'option respectif, chacun fournissant une valeur de terminaison d'option selon des valeurs de paramètre du réseau neuronal de terminaison d'option qui détermine si le critère de terminaison d'option est satisfait pour le réseau neuronal de politique d'option respectif, et

la fixation des valeurs de paramètre du réseau neuronal de terminaison d'option pendant le traitement des observations pour les étapes temporelles successives par le réseau neuronal de politique d'option sélectionné, et après le traitement des observations pour les étapes temporelles successives par le réseau neuronal de politique d'option sélectionné, l'entraînement du réseau neuronal de terminaison d'option respectif à l'aide des récompenses de tâche.

15. Instructions lisibles par ordinateur, ou un ou plusieurs supports de stockage informatique stockant des instructions lisibles par ordinateur qui, lorsqu'elles sont exécutées par un ou plusieurs ordinateurs, amènent les un ou plusieurs ordinateurs à mettre en œuvre le système selon l'une quelconque des revendications 1 à 12 ou le procédé selon l'une quelconque des revendications 13 ou 14.

Fig. 1

200

RECEIVE OBSERVATION OF STATE OF THE ENVIRONMENT AT TIME STEP $s_t$ AND DATA IDENTIFYING CURRENT TASK g

202

PROCESS OBSERVATION AND DATA IDENTIFYING THE TASK TO GENERATE A MANAGER NEURAL NETWORK OUTPUT

204

USE MANAGER NEURAL NETWORK POLICY OUTPUT TO SELECT AN ACTION FOR AGENT OR AN OPTION POLICY NEURAL NETWORK

206

USE THE SELECTED OPTION POLICY NEURAL NETWORK TO SELECT AN ACTION FOR THE AGENT

208

GENERATE AN OUTPUT TO CAUSE THE AGENT TO PERFORM THE SELECTED ACTION; RECEIVE NEXT OBSERVATION AND TASK REWARD

210

USE SELECTED OPTION POLICY NEURAL NETWORK TO CONTINUE RECEIVING OBSERVATIONS AND SELECTING ACTIONS FOR AGENT UNTIL OPTION TERMINATION CRITERION MET

Fig. 2

300

SAMPLE TASK

302

PROCESS OBSERVATION AND DATA
IDENTIFYING TASK USING MANAGER NEURAL
NETWORK TO SELECT AGENT ACTION OR
OPTION

304

PROCESS OBSERVATION USING OPTION
POLICY NEURAL NETWORKS, OPTION
REWARD NEURAL NETWORKS, AND OPTION
TERMINATION NEURAL NETWORKS; SELECT
AGENT ACTION FOR SELECTED OPTION

306

GENERATE OUTPUT TO CONTROL AGENT
PERFORM SELECTED ACTION; OBTAIN NEW
OBSERVATION AND REWARD

308

OBTAIN TRAJECTORY OF TRANSITIONS

310

TRAIN MANAGER NEURAL NETWORK AND
SELECTED OPTION POLICY NEURAL
NETWORK USING TRAJECTORY

Fig. 3

400

```
PERFORM INNER LOOP PROCESS
```

402

```
SELECT A TASK
```

404

```
PERFORM STEPS OF THE TASK TO OBTAIN A
VALIDATION TRAJECTORY FOR AN OPTION
```

406

```
USE THE VALIDATION TRAJECTORY TO
UPDATE PARAMETERS OF THE OPTION
REWARD NEURAL NETWORK AND THE
OPTION TERMINATION NEURAL NETWORK
FOR THE OPTION USING TASK REWARDS
```

# Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019354813 A

**Non-patent literature cited in the description**

- **FLORENSA et al.** Stochastic Neural Networks for Hierarchical Reinforcement Learning. *arXiv:1704.03012v1*

- **PIERRE-LUC BACON et al.** *The Option-Critic Architecture*